# EUROPÄISCHE PATENTSCHRIFT

(11) **EP 1 219 375 B1**
(45) Veröffentlichungstag und Bekanntmachung des Hinweises auf die Patenterteilung: **31.08.2005**
(21) Anmeldenummer: 01128883.4
(22) Anmeldetag: 05.12.2001
(51) Int. Cl.: B23K 1/00, F01D 5/00, B23P 9/04

(54) **Verfahren zum Reparieren von Schadstellen an einem Metallbauteil**
Method for repairing damaged areas on a metallic workpiece
Méthode de réparation de parties endommagées sur une pièce de métal

(30) Priorität: 27.12.2000 DE 10065406
(43) Veröffentlichungstag der Anmeldung: 03.07.2002
(73) Patentinhaber: Alstom Technology Ltd, 5400 Baden (CH)
(72) Erfinder: Fried, Reinhard, 5415 Nussbaumen (CH)

(56) Entgegenhaltungen:
- US-A- 4 381 944
- PATENT ABSTRACTS OF JAPAN vol. 33 (M-638), 4. November 1987 (1987-11-04) & JP 62 118004 A (TOSHIBA CORP), 29. Mai 1987 (1987-05-29)

## Beschreibung

### Technisches Gebiet

Die Erfindung betrifft ein Verfahren zum Reparieren von oberflächlichen, durch einen Materialverlust gebildeten Schadstellen an einem Metallbauteil, gemäß dem Oberbegriff des Anspruchs 1, Siehe z. B. US-A-4 381 944.

### Stand der Technik

Metallbauteile, wie z.B. die Schaufeln oder andere Bestandteile einer Strömungsmaschine, insbesondere einer Turbine oder eines Verdichters, können hohen Beanspruchungen durch Oxidation und/oder Korrosion und/oder Erosion und/oder Abrasion ausgesetzt sein. Insbesondere bei Turbinenschaufeln können diese Beanspruchungen an der Oberfläche der Schaufeln lokal zu einem Materialverlust oder Materialabtrag führen, wodurch sich Schadstellen, insbesondere in Form von relativ großflächigen Vertiefungen oder Löchern, bilden. Aufgrund hoher Neupreise für derartige Schaufeln, ist man bestrebt, diese Schadstellen an den Schaufeln zu reparieren, um einerseits deren Festigkeit und andererseits deren Strömungsqualität wieder herzustellen. Eine Möglichkeit, die Schadstellen bzw. das Bauteil zu reparieren, besteht darin, die Schadstellen mittels eines Hochtemperaturlötverfahrens aufzufüllen. Bei einer herkömmlichen Vorgehensweise wird beim Hochtemperaturlötverfahren ein übliches Metalllot verwendet, das eine metallische Oberfläche benetzt und beim Verlöten eine Diffusionsverbindung mit der metallischen Oberfläche eingeht. Zum Auffüllen relativ großflächiger Schadstellen werden sogenannte "Weit-Spalt-Lote" oder "WideGap-Lot" verwendet; das sind Metallote, denen ein Metallfüller beigemischt ist, wobei dieser Metallfüller vorzugsweise ähnliche Eigenschaften wie das Metall des Metallbauteils aufweist.

Insbesondere durch die oxidative und korrosive Beanspruchung eines Metallbauteils können sich an oder in den Schadstellen nichtmetallische Reaktionsprodukte, wie z.B. Oxide oder Nitride ausbilden. Da ein übliches Metalllot nichtmetallische Oberflächen nicht benetzen und mit diesen auch keine Diffusionsverbindung eingehend kann, ist es zur Durchführung des Lötverfahrens zwingend erforderlich, die aufzufüllenden Schadstellen von diesen nichtmetallischen Reaktionsprodukten zu reinigen, beispielsweise durch Ausschleifen oder Sandstrahlen. Es hat sich jedoch gezeigt, daß die durch ein herkömmliches Hochtemperaturlötverfahren applizierten Füllungen, insbesondere bei den hochbeanspruchten Turbinenschaufeln, in einigen Fällen keine zufriedenstellende Haltbarkeit aufweisen, so daß es nach einer relativ kurzen Standzeit im Bereich der Reparaturen erneut zu Schadstellen kommen kann.

Die US 5 334 344 zeigt ein Verfahren zum Anlöten eines Keramikteils, eines Einkristalls und eines Metallteils an einem Einkristall oder eines Keramikteils an einem Metallteil oder eines Einkristalls an einem Metallteil, wobei zur Herstellung der Lötverbindung ein Aktivlot verwendet wird. Unter einem "Aktivlot" wird eine Legierung verstanden, die zumindest ein Element, wie z.B. Titan, enthält, das eine Affinität für Nichtmetalle, z.B. Sauerstoff, Stickstoff, besitzt, so daß während des Lötvorgangs keine Flußmittel erforderlich sind. Ein Aktivlot besitzt somit die besondere Eigenschaft, sowohl metallische als auch nichtmetallische Oberflächen benetzen zu können und beim Verlöten mit einer nichtmetallischen Oberfläche eine Reaktionsverbindung und beim Verlöten mit einer metallischen Oberfläche eine Diffusionsverbindung eingehen zu können.

### Darstellung der Erfindung

Die vorliegende Erfindung beschäftigt sich mit dem Problem, ein Verfahren der eingangs genannten Art so auszubilden, daß eine danach ausgeführte Reparatur eine erhöhte Haltbarkeit besitzt.

Erfindungsgemäß wird dieses Problem bei einem Verfahren der eingangs genannten Art dadurch gelöst, daß bei einem Hochtemperaturlötverfahren, mit dem die Schadstellen aufgefüllt werden, ein Aktivlot verwendet wird.

Die Erfindung beruht auf dem allgemeinen Gedanken, die vorteilhaften Eigenschaften eines Aktivlots, die grundsätzlich für die Herstellung einer Lötverbindung zwischen zwei Bauteilen bekannt sind, nunmehr auch zum Auffüllen einer Schadstelle im Rahmen einer Reparatur eines Metallbauteils auszunutzen. Diese Überlegungen beruhen auf der Erkenntnis, daß es im Rahmen einer Reparatur oftmals nicht möglich ist, die Schadstellen vollständig von den nichtmetallischen Reaktionsprodukten, z.B. Oxide, zu reinigen. Die in der jeweiligen Schadstelle verbleibenden Reste an nichtmetallischen Oberflächen können bei der Durchführung des Hochtemperaturlötverfahrens von einem üblichen Metalllot nicht benetzt werden, so daß in diesen Oberflächenabschnitten auch keine Diffusionsverbindung zwischen dem Metallbauteil und der Füllung ausgebildet werden kann. Diese Fehlstellen oder Schwachstellen in der Verbindung zwischen Füllung und Metallbauteil reduzieren die Haltbarkeit der Füllung und somit der Reparatur. Untersuchungen haben gezeigt, daß die nichtmetallischen Reaktionsprodukte auch nach einem üblichen, mechanischen Reinigungsvorgang in den tiefen, kaum zugänglichen Rauhigkeiten der durch Korrosion, Oxidation, Erosion bzw. Abrasion aufgerauhten Oberfläche der jeweiligen Schadstelle sitzen. Des weiteren hat sich gezeigt, daß sich die für die Benetzung und Lötverbindung schädlichen nichtmetallischen Reaktionsprodukte auch auf einer an sich vollständig gereinigten, glatten, ebenen Oberfläche quasi von selbst ausbilden, wenn diese Oberfläche ungeschützt ist. Dies kann beispielsweise beim Erwärmen des Bauteils während des Reinigungsvorganges erfolgen; ebenso kann dies beim Aufheizen im Rahmen des Lötvorganges erfolgen, wenn die vorliegende Ofenatmosphäre nicht hinreichend überwacht wird, z.B. hinsichtlich Vakuum oder Ausgasung.

Durch die Verwendung eines Aktivlots wird bei der Reparatur von Schadstellen an einem Metallbauteil erreicht, daß das Aktivlot in der Schadstelle in Bereichen mit metallischer Oberfläche eine Diffusionsverbindung eingeht und in Bereichen mit nichtmetallischer Oberfläche, also in Bereichen der störenden Reaktionsprodukte, Reaktionsverbindungen aufbaut. Dementsprechend besitzt das Aktivlot eine hohe Anbindung sowohl an den metallischen Oberflächen als auch an den nichtmetallischen Oberflächen. Von besonderer Bedeutung ist außerdem, daß das Aktivlot sowohl metallische als auch nichtmetallische Oberflächen gleichermaßen benetzt, so daß sich eine lückenlose Applikation des Aktivlots leicht erreichen läßt. Dies hat eine qualitativ hochwertige Füllung mit großer Haltbarkeit zur Folge.

Dabei ist es grundsätzlich möglich, die komplette Füllung durch das Aktivlot zu bilden. Vorzugsweise kann dann dem Aktivlot ein Metallfüller beigemischt werden, um z.B. die Fließeigenschaften dieses Aktivlots in einer geeigneten Weise zu beeinflussen. Ebenso können durch einen Metallfüller die thermischen Eigenschaften sowie die Festigkeitseigenschaften der Füllung in einer gewünschten Weise beeinflußt werden.

Bei einer anderen Ausführungsform kann das Aktivlot einem üblichen Metalllot beigemischt sein. Durch die Anreicherung des Metalllots mit dem Aktivlot wird das Metalllot quasi aktiviert, so daß es die nichtmetallischen Oberflächen der Reaktionsprodukte benetzen und mit diesen Reaktionsverbindungen eingehen kann.

Bevorzugt wird jedoch eine Ausführungsform, bei der eine Schicht Aktivlot auf die Schadstellen aufgebracht wird, wobei auf diese Aktivlotschicht eine Schicht aus einem üblichen Metalllot aufgebracht wird. Dabei kann diese schichtweise Aufbringung von Aktivlot und Metalllot nacheinander oder quasi gleichzeitig durchgeführt werden. Durch diese Vorgehensweise ergibt sich eine Gesamtbeschichtung, die an der Oberfläche der Schadstellen eine hohe Konzentration an Aktivlot besitzt, wobei das Aktivlot mit zunehmender Entfernung von der Oberfläche der Schadstelle in das Metalllot übergeht.

Gemäß einer Weiterbildung des Verfahrens können die Aktivlotschicht und die Metalllotschicht in einem einzigen Lötzyklus verlötet werden. Unter einem "Lötzyklus" wird hierbei ein Vorgang verstanden, bei dem das Lot aufschmilzt und die erwünschten Diffusionsverbindungen bzw. Reaktionsverbindungen eingeht. Durch das Verlöten der Aktivlotschicht und der Metalllotschicht in einem einzigen Lötzyklus ergibt sich z.B. ein Zeitvorteil.

Bei einer alternativen Weiterbildung kann die Aktivlotschicht vor dem Aufbringen der Metalllotschicht in einem ersten Lötzyklus verlötet werden, während nach dem Aufbringen der Metalllotschicht in einem zweiten Lötzyklus die Metalllotschicht verlötet wird. Bei dieser Vorgehensweise können die einzelnen Lötzyklen hinsichtlich ihrer Parameter für die jeweilige Lotschicht optimiert werden; die hiervon betroffenen Parameter sind beispielsweise: Temperatur, Druck, Zeit, Vakuumgüte.

Entsprechend einer bevorzugten Ausführungsform können das Aktivlot und das Metalllot jeweils als Paste ausgebildet sein, wobei dann die Aktivlotpaste relativ zur Metalllotpaste dünnflüssig ist. Durch diese Maßnahme kann die Aktivlotpaste besser in Vertiefungen eindringen, die sich in der jeweiligen Schadstelle aufgrund der dort herrschenden Oberflächenrauhigkeit ausgebildet haben. Das Aktivlot kann sich dadurch auch besser an die Oberflächenstruktur in der Schadstelle anpassen.

Bei einer besonderen Ausführungsform kann das Aktivlot an oder in der jeweiligen Schadstelle dadurch gebildet werden, daß auf die jeweilige Schadstelle zunächst ein Aktivmetall, beispielsweise pulverförmig oder granulatförmig, und danach ein übliches Metalllot aufgebracht werden. Durch diese Maßnahme wird dem auf die Schadstelle aufgetragenen Metalllot lokal das Aktivmetall zugemischt, so daß sich direkt an der Oberfläche der Schadstelle im Metalllot ein Aktivlotbereich ausbildet. Das Aktivlot wird somit genau an der Stelle bereitgestellt, an der es zur Erzielung der erwünschten Reaktionsverbindungen erforderlich ist. Aktivmetalle sind beispielsweise Titan (Ti), Hafnium (Hf), Zirkonium (Zr). Die Applikation des Aktivmetalls kann beispielsweise durch Bürsten oder Bestrahlen erfolgen.

Weitere wichtige Merkmale und Vorteile des erfindungsgemäßen Verfahrens ergeben sich aus den Unteransprüchen, aus der Zeichnung und aus der zugehörigen Figurenbeschreibung anhand der Zeichnung.

### Kurze Beschreibung der Zeichnung

Ein bevorzugtes Ausführungsbeispiel der Erfindung ist in der Zeichnung dargestellt und wird in der nachfolgenden Beschreibung näher erläutert.

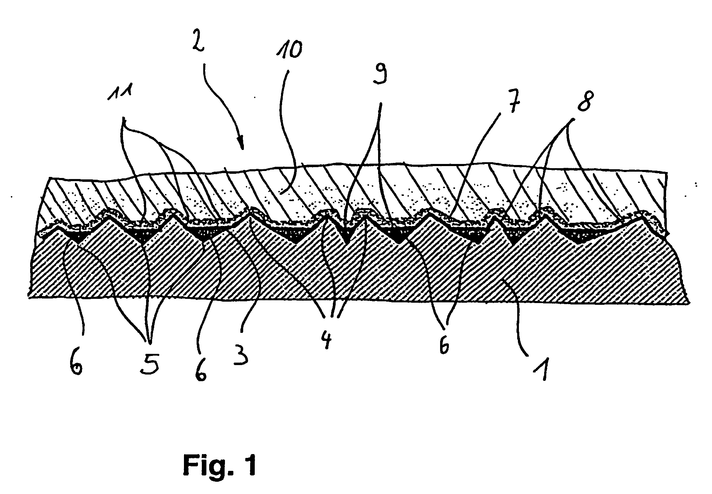

Die einzige Figur 1 zeigt ein Schnittbild durch ein Metallbauteil im Bereich einer Schadstelle.

### Wege zur Ausführung der Erfindung

Entsprechend Fig. 1 besitzt ein Metallbauteil 1, das beispielsweise ein Bestandteil, z.B. eine Schaufel, einer Turbine sein kann, an seiner Oberfläche einen durch eine Materialverlust gebildete Schadstelle 2, die beispielsweise beim Gebrauch des Bauteils 1 durch eine oxidative und/oder korrosive und/oder erosive und/oder abrasive Umgebung entstehen kann. Im Bereich der Schadstelle 2 entsteht dadurch eine Oberfläche 3 mit einem relativ großen Rauhigkeitsgrad, was in Fig. 1 vereinfacht durch Berge 4 und Täler 5 angedeutet ist.

Durch eine entsprechend aggressive Umgebung können sich vor allem im Bereich der Schadstelle 2 an der Oberfläche 3 des Metallbauteils 1 nichtmetallische Reaktionsprodukte, z.B. Oxide, ausbilden. Wenn die Schadstelle 2 repariert werden soll, wird diese zuvor gereinigt, beispielsweise mechanisch durch Sandstrahlen und/oder Bürsten. Hierbei wird ein großer Teil der nichtmetallischen Reaktionsprodukte von der Oberfläche 3 des Metallbauteils 1 entfernt. Diese Reinigung der Oberfläche 3 ist regelmäßig nicht vollständig, so daß insbesondere in den Tälern 5 der rauhen Oberfläche 3 Reste der nichtmetallischen Reaktionsprodukte verbleiben. In Fig. 1 sind die nach dem Reinigungsvorgang verbleibenden, nichtmetallischen Reaktionsprodukte mit 6 bezeichnet.

Gemäß Fig. 1 grenzt an die Oberfläche 3 des Metallbauteils 1 ein Aktivlot 7 an, das nach dem Verlöten in Bereichen der Gipfel 4 mit der dort vorhandenen metallischen Oberfläche des Metallbauteils 1 Diffusionsverbindungen 8 eingeht. Im Unterschied dazu geht das Aktivlot 7 in Bereichen der Täler 5 mit den nichtmetallischen Oberflächen der Reaktionsprodukte 6 Reaktionsverbindungen 9 ein. Dementsprechend besitzt das Aktivlot 7 nach dem Verlöten eine hochfeste Anbindung sowohl an den nichtmetallischen Reaktionsprodukten 6 als auch an der metallischen Oberfläche 3 des Metallbauteils 1. Da die nichtmetallischen Reaktionsprodukte 6 ihrerseits über Reaktionsverbindungen mit der metallischen Oberfläche 3 des Metallbauteils 1 verbunden sind, ergibt sich für das Aktivlot 7 eine lückenlose intensive Anbindung am Metallbauteil 1.

An das Aktivlot 7 grenzt ein übliches Metalllot 10 an, das nach dem Verlöten mit der daran angrenzenden metallischen Oberfläche des Aktivlots 7 eine Diffusionsverbindung 11 eingegangen ist. Dementsprechend besteht auch eine hochfeste Anbindung des Metalllots 10 an das Aktivlot 7. Beachtenswert ist hierbei, daß einerseits das Aktivlot 7 sowohl die metallischen Oberflächenabschnitte des Metallbauteils 1 als auch die nichtmetallischen Oberflächenabschnitte der Reaktionsprodukte 6 benetzt, so daß sich im wesentlichen eine geschlossene Benetzung im Bereich der Schadstelle 2 ergibt. Andererseits hat dies zur Folge, daß das aufgebrachte Aktivlot 7 eine geschlossene metallische Oberfläche besitzt, die durch das Metalllot 10 vollständig benetzbar ist. Insofern ergibt sich eine qualitativ hochwertige Auffüllung der Schadstelle 2. Im Unterschied zu Fig. 1 ist nach dem Verlöten eine Grenze zwischen dem Aktivlot 7 und dem Metalllot 10 aufgrund der Diffusionsverbindungen 11 in der Regel nicht mehr sichtbar.

Eine spezielle Ausführungsform des erfindungsgemäßen Reparaturverfahrens kann wie folgt ablaufen:

Zunächst wird die Oberfläche 3 im Bereich der Schadstellen 2 gereinigt. Dabei verbleiben von der Reinigung nicht erfaßte Reste der nichtmetallischen Reaktionsprodukte 6 insbesondere in den Tälern 5 oder bilden sich dort durch die Erwärmung während der Reinigung. Anschließend wird im Bereich der Schadstellen 2 eine Schicht Aktivlot 7 aufgetragen. Das Aktivlot 7 kann dabei als relativ dünnflüssige Paste vorliegen, die leicht in die Täler 5 der Oberflächenrauhigkeit eindringt. Durch die besondere Eigenschaft des Aktivlots 7 benetzt dieses dabei sowohl die metallischen Oberflächen als auch die nichtmetallischen Oberflächen, die in der Schadstelle 2 auftreten. Insoweit ist mit dem Aktivlot 7 eine lückenlose Benetzung der Oberfläche 3 in der Schadstelle 2 realisierbar.

Nach dem Aufbringen der Aktivlotschicht kann ein erster Lötzyklus gefahren werden, bei dem das Metallbauteil 1 zusammen mit der aufgebrachten Aktivlotschicht erwärmt wird. Durch diesen Lötvorgang bilden sich die Diffusionsverbindungen 8 und die Reaktionsverbindungen 9 aus, so daß nunmehr das Aktivlot 7 die Oberfläche in der Schadstelle 2 bildet.

Als Aktivlot 7 können beispielsweise verwendet werden: AM900, AuPdTi, AuNiTi, PdNiTi, AuTi, CuSiAlTi, AgCulnTi, AgCuHf, AgCuTi, NiZrTi, NiTi. Die Dicke der aufgetragenen Aktivlotschicht kann beispielsweise 10µm betragen.

Nach dem ersten Lötzyklus wird das Metalllot 10 aufgebracht, das beispielsweise in Form einer relativ zähflüssigen Paste auf die angelötete bzw. vorgelötete Aktivlotschicht aufgetragen wird. Dabei kann das Metalllot 10 ohne weiteres die metallische Oberfläche der Aktivlotschicht benetzen. Anschließend wird ein zweiter Lötzyklus gefahren, bei dem wiederum das Metallbauteil 1 und die Lötschichten erwärmt werden. Durch diesen Lötvorgang können sich nun die Diffusionsverbindungen 11 zwischen Aktivlot 7 und Metalllot 10 ausbilden.

Das Aktivmetall des jeweiligen Aktivlots 7 reagiert mit dem nichtmetallischen Reaktionsprodukt 6, z.B. mit einem Oxid. Dabei bildet sich eine Reaktionsschicht mit einer metallischen Oberfläche, die also von einem herkömmlichen Metalllot 10 benetzbar ist. Eine benetzungsfähige Reaktionsschicht kann 1 bis 5 µm dick sein. Das Metalllot 10 kann beispielsweise ein Weit-Spalt-Lot sein, das einen Metallfüller enthält. Das Metalllot 10 kann sich auf der durch das verlötete Aktivlot 7 gebildeten, durchgehend sauberen und benetzbaren Oberfläche lückenlos ausbreiten. Diese lückenlose Verteilung des Metalllots 10 führt zu einer erheblichen Qualitätsverbesserung der Füllung, die durch das Hochtemperaturlötverfahren zur Reparatur der Schadstelle 2 appliziert worden ist.

Während der Lötzyklen werden das Metallbauteil 1 und das jeweilige Lot 7,10 z.B. auf etwa 1.000° C erwärmt, so daß es sich hierbei um ein Hochtemperaturlötverfahren handelt.

Nach dem zweiten Lötzyklus kann ein Spannungsglühzyklus durchgeführt werden, bei dem Spannungen, die durch die Lötzyklen entstanden sind, abgebaut werden. Anschließend kann insbesondere die Oberfläche des Metalllots 10 bearbeitet werden, um beispielsweise die Oberfläche der Reparaturstelle an die ursprüngliche Kontur des Metallbauteils 1 anzugleichen.

### Bezugszeichenliste

- 1: Metallbauteil
- 2: Schadstelle
- 3: Oberfläche von 1 in 2
- 4: Berg
- 5: Tal
- 6: Reaktionsprodukt
- 7: Aktivlot
- 8: Diffusionsverbindung zwischen 7 und 1
- 9: Reaktionsverbindung zwischen 7 und 6
- 10: Metalllot
- 11: Diffusionsverbindung zwischen 10 und 7

## Patentansprüche

1. Verfahren zum Reparieren einer oberflächlichen, durch einen Materialverlust gebildeten Schadstelle (2) an einem Metallbauteil (1), wobei mittels eines Hochtemperaturlötverfahrens die Schadstelle (2) aufgefüllt wird, **dadurch gekennzeichnet daß** beim Hochtemperaturlötverfahren ein Aktivlot (7) verwendet wird.

2. Verfahren nach Anspruch 1
**dadurch gekennzeichnet,**
**daß** dem Aktivlot (7) ein Metallfüller beigemischt ist.

3. Verfahren nach Anspruch 1 oder 2,
**dadurch gekennzeichnet,**
**daß** das Aktivlot (7) einem üblichen Metalllot (10) beigemischt ist.

4. Verfahren nach einem der Ansprüche 1 bis 3,
**dadurch gekennzeichnet,**
**daß** eine Schicht Aktivlot (7) auf die Schadstelle (2) aufgebracht wird und daß auf diese Aktivlotschicht eine Schicht aus einem üblichen Metalllot (10) aufgebracht wird.

5. Verfahren nach Anspruch 4,
**dadurch gekennzeichnet,**
**daß** die Aktivlotschicht und die Metalllotschicht in einem einzigen Lötzyklus verlötet werden.

6. Verfahren nach Anspruch 4,
**dadurch gekennzeichnet,**
**daß** die Aktivlotschicht vor dem Aufbringen der Metalllotschicht in einem ersten Lötzyklus verlötet wird und daß nach dem Aufbringen der Metalllotschicht in einem zweiten Lötzyklus die Metalllotschicht verlötet wird.

7. Verfahren nach einem der Ansprüche 4 bis 6,
**dadurch gekennzeichnet,**
**daß** das Aktivlot (7) und das Metalllot (10) jeweils als Paste ausgebildet sind, wobei die Aktivlotpaste relativ zur Metalllotpaste dünnflüssig ist.

8. Verfahren nach einem der Ansprüche 1 bis 7,
**dadurch gekennzeichnet,**
**daß** das Aktivlot (7) an oder in der Schadstelle (2) **dadurch** gebildet wird, daß auf die Schadstelle (2) zunächst ein Aktivmetall und danach ein übliches Metalllot (10) aufgebracht wird.

9. Verfahren nach einem der Ansprüche 3 bis 8,
**dadurch gekennzeichnet,**
**daß** dem Metalllot (10) ein Metallfüller beigemischt ist.

10. Verfahren nach einem der Ansprüche 1 bis 9,
**dadurch gekennzeichnet,**
**daß** das Metallbauteil (1) ein Bestandteil einer Strömungsmaschine ist.

11. Verfahren nach Anspruch 10,
**dadurch gekennzeichnet,**
**daß** die Strömungsmaschine eine Turbine oder ein Verdichter ist.

12. Verfahren nach Anspruch 10 oder 11,
**dadurch gekennzeichnet,**
**daß** das Metallbauteil (1) eine Schaufel der Strömungsmaschine ist.

## Claims

1. Method for repairing a damaged area (2), formed by loss of material, on the surface of a metal component (1), the damaged area (2) being filled by means of a high-temperature brazing process, **characterized in that** an active brazing alloy (7) is used in the high-temperature brazing process.

2. Method according to Claim 1, **characterized in that** a metal filler is admixed with the active brazing alloy (7).

3. Method according to Claim 1 or 2, **characterized in that** the active brazing alloy (7) is admixed with a standard metal brazing alloy (10).

4. Process according to one of Claims 1 to 3, **characterized in that** a layer of active brazing alloy (7) is applied to the damaged area (2) and **in that** a layer of a standard metal brazing alloy (10) is applied to this active brazing alloy layer.

5. Method according to Claim 4, **characterized in that** the active brazing alloy layer and the metal brazing alloy layer are brazed in a single brazing cycle.

6. Method according to Claim 4, **characterized in that** the active brazing alloy layer is brazed prior to the application of the metal brazing alloy layer, in a first brazing cycle, and **in that** the metal brazing alloy layer is brazed after it has been applied, in a second brazing cycle.

7. Method according to one of Claims 4 to 6, **characterized in that** the active brazing alloy (7) and the metal brazing alloy (10) are each in the form of a paste, the active brazing alloy paste having a low viscosity relative to the metal brazing alloy paste.

8. Method according to one of Claims 1 to 7, **characterized in that** the active brazing alloy (7) is formed at or in the damaged area (2) by applying firstly an active metal and then a standard metal brazing alloy (10) to the damaged area (2).

9. Method according to one of Claims 3 to 8, **characterized in that** a metal filler is admixed with the metal brazing alloy (10).

10. Method according to one of Claims 1 to 9, **characterized in that** the metal component (1) is part of a turbomachine.

11. Method according to Claim 10, **characterized in that** the turbomachine is a turbine or a compressor.

12. Method according to Claim 10 or 11, **characterized in that** the metal component (1) is a blade or vane of the turbomachine.

## Revendications

1. Procédé pour réparer une partie endommagée (2) superficielle formée par une perte de matériau sur une pièce de métal (1), dans lequel la partie endommagée (2) est remplie au moyen d'un procédé de brasage à haute température, **caractérisé en ce que** l'on utilise une brasure active (7) dans le procédé de brasage à haute température.

2. Procédé selon la revendication 1,
**caractérisé en ce que**
la brasure active (7) est mélangée à un métal de charge.

3. Procédé selon la revendication 1 ou 2,
**caractérisé en ce que**
la brasure active (7) est mélangée à un métal d'apport usuel (10).

4. Procédé selon l'une quelconque des revendications 1 à 3,
**caractérisé en ce que**
l'on applique une couche de brasure active (7) sur la partie endommagée (2) et **en ce que** l'on applique par-dessus cette couche de brasure active une couche d'un métal d'apport usuel (10).

5. Procédé selon la revendication 4,
**caractérisé en ce que**
la couche de brasure active et la couche de métal d'apport sont brasées au cours d'un cycle de brasage unique.

6. Procédé selon la revendication 4,
**caractérisé en ce que**
la couche de brasure active est brasée avant l'application de la couche de métal d'apport dans un premier cycle de brasage et **en ce qu'**après l'application de la couche de métal d'apport dans un deuxième cycle de brasage, la couche de métal d'apport est brasée.

7. Procédé selon l'une quelconque des revendications 4 à 6,
**caractérisé en ce que**
la brasure active (7) et le métal d'apport (10) sont réalisés respectivement sous forme de pâte, la pâte de brasure active étant relativement fluide par rapport à la pâte de métal d'apport.

8. Procédé selon l'une quelconque des revendications 1 à 7,
**caractérisé en ce que**
la brasure active (7) est formée sur ou dans la partie endommagée (2), de telle manière qu'un métal actif soit d'abord appliqué sur la partie endommagée (2), puis un métal d'apport usuel (10).

9. Procédé selon l'une quelconque des revendications 3 à 8,
**caractérisé en ce que**
l'on mélange un métal de charge au métal d'apport (10).

10. Procédé selon l'une quelconque des revendications 1 à 9,
**caractérisé en ce que**
la pièce en métal (1) est un composant d'une turbomachine.

11. Procédé selon la revendication 10,
**caractérisé en ce que**
la turbomachine est une turbine ou un compresseur.

12. Procédé selon la revendication 10 ou 11,
**caractérisé en ce que**
le composant métallique (1) est une aube de la turbomachine.
